# EUROPÄISCHE PATENTANMELDUNG

(11) **EP 2 181 788 A2**
(43) Veröffentlichungstag der Anmeldung: **05.05.2010**
(21) Anmeldenummer: 09174056.3
(22) Anmeldetag: 26.10.2009
(51) Int. Cl.: B23D 47/04, B27B 27/08, G05B 19/21

(54) **Steuerungsverfahren für eine Formatkreissäge**

(30) Priorität: 04.11.2008 DE 102008055770
(71) Anmelder: Wilhelm Altendorf GmbH & Co. KG, 32429 Minden (DE)
(72) Erfinder: Tweer, Rolf, 32429 Minden (DE); Ruchatz, Jürgen, 32425 Minden (DE)
(74) Vertreter: Eisenführ, Speiser & Partner

(57) **Zusammenfassung**

Die Erfindung betrifft ein Steuerungsverfahren für eine Kreissäge, mit den Schritten:
- Eingeben eines Referenz-Sollmaßes über eine Schnittstelle, insbesondere eine Benutzerschnittstelle oder eine PC-Schnittstelle,
- Verfahren eines Werkstückpositionierelements, insbesondere eines Anschlags oder eine Werkstücktransportelements, auf eine aus dem Referenz-Sollmaß berechnete Position.

Erfindungsgemäß wird ein Schnitt-Sollmaß ermittelt, bei dem das Referenz-Sollmaß mit einem Kompensationsfaktor multipliziert wird, und das Werkstückpositionierelement auf eine Position verfahren wird, welche ein mittels des Werkstückpositionierelementes positioniertes Werkstück solcherart zu der Schnittkante des Kreissägeblatts positioniert, dass bei Durchführung des Schnitts das Werkstück in einer Länge geschnitten wird, die dem Schnitt-Sollmaß entspricht oder über eine Benutzerschnittstelle eine Position ausgegeben wird, auf die das Werkstückpositionierelement manuell verfahrbar ist, dass bei Durchführung des Schnitts an einem Werkstück, das mittels eines solcherart manuell verfahrenen Werkstückpositionierelements positioniert ist, eine Länge geschnitten wird, die dem Schnitt-Sollmaß entspricht.

## Beschreibung

Die Erfindung betrifft ein Steuerungsverfahren für eine Kreissäge, mit den Schritten:
- Eingeben eines Referenz-Sollmaßes über eine Schnittstelle, insbesondere eine Benutzerschnittstelle oder eine PC-Schnittstelle,
- Verfahren eines Werkstückpositionierelements, insbesondere eines Anschlags oder eine Werkstücktransportelements, auf eine aus dem Referenz-Sollmaß berechnete Position.

Ein weiterer Aspekt der Erfindung ist eine Steuerungseinheit für eine Kreissäge, die zur Durchführung eines solchen Verfahrens ausgebildet ist.

Die Erfindung betrifft insbesondere fest installierte Kreissägen wie Formatkreissägen oder Plattensägen, bei denen das Werkstück auf einer Werkstückauflage aufgelegt wird und ein mit dem Werkstück durchzuführender Schnitt mittels eines Schnittmaßes festgelegt wird, indem das Werkstück gegen einen Anschlag angelegt wird. Der Anschlag steht in einem definierten Abstand zum Kreissägeblatt. Das Werkstück kann hierbei nach Einstellung des Anschlags und entsprechender Auflage des Werkstücks auf die Auflagefläche und an den Anschlag mittels einer verfahrbaren Auflagefläche am feststehenden Kreissägeblatt entlanggeführt werden und hierdurch der Schnitt ausgeführt werden oder das Kreissägeblatt wird am feststehenden Werkstück entlanggeführt, um den Schnitt hierdurch auszuführen.

Formatkreissägen dieser Art sind bekannt, so ist beispielsweise aus EP 1 837 110 B1 eine solche Formatkreissäge bekannt, bei der der Längenanschlag motorisch verstellt werden kann, um hierdurch die Bearbeitungsgeschwindigkeit und effizienz zu steigern.

Grundsätzlich bietet eine solche Art eines Steuerungsverfahrens bzw. einer Steuerung für eine Kreissäge und insbesondere deren Anschlag eine effiziente Bearbeitungsmöglichkeit für Werkstücke, indem die Längenmaße über eine Benutzerschnittstelle, wie beispielsweise ein Tastaturfeld, einen Touchscreen oder dergleichen eingegeben werden, in der Steuerung der Maschine verarbeitet werden und nachfolgend ein oder mehrere Längenanschläge der Kreissäge entsprechend verfahren werden, um die Schnitte jeweils nachfolgend auf das eingegebene Längenmaß durchführen zu können.

Allerdings steigen die Anforderungen an die Maßgenauigkeit solcher Schnitte, was zu dem Bedarf führt, Steuerungsverfahren bereitzustellen, mit denen ein gewünschtes Sollmaß eines Werkstücks mit einer noch weiter verbesserten Genauigkeit erzielt werden kann.

Aus DE 33 02 063 C2 ist eine Einrichtung zur Kompensation von Lagefehlern an Werkzeugmaschinen bekannt. Die Einrichtung zeichnet sich dadurch aus, dass eine Überlagerung von Istwerten mit Korrekturwerten für jede Achse vor der Verarbeitung der Istwerte im Soll-Istwertvergleicher erfolgt. Rechtwinkligkeitsfehler werden durch Wertetabellen kompensiert, die durch einen Vergleich von Soll- und Istwerten entstehen, die in diskreten Positionsabständen je Achse ermittelt werden. Darin enthalten sind Korrekturwerte für jede der drei Achsen. Das solcherart vorbekannte Verfahren dient dazu, um einerseits herstellungsbedingte Fehler, andererseits lastbedingte Fehler oder temperaturbedingte Fehler an solchen Werkzeugmaschinen zu kompensieren.

Des Weiteren werden mit Kreissägen der zuvor genannten Art eine zunehmende Anzahl unterschiedlicher Werkstoffe und Materialien verarbeitet, darunter neben den klassischen Holzwerkstoffen auch eine große Zahl von Kunststoffen und Leichtmetallen. Es besteht ein Bedarf, ein Steuerungsverfahren und eine Steuerung für eine Kreissäge bereitzustellen, welche im Hinblick auf diese Vielzahl von Werkstoffen eine noch weiter erhöhte Maßgenauigkeit ermöglicht.

Ein weiteres Problem, welches mit Steuerungsverfahren und Steuerungen von Kreissägen verbunden ist, besteht darin, dass es dem Bediener einer Kreissäge aufgrund der Werkstattumgebung und aufgrund des zunehmenden Zeitdrucks bei der Bearbeitung von Werkstücken oftmals schwer fällt, die erforderlichen Schnittmaße eines Werkstücks zu berechnen, wenn sich aus dessen späterer Verwendung spezifisch zu berücksichtigende Einflussfaktoren ergeben. So wird einem Benutzer einer Kreissäge in bestimmten Anwendungsfällen eine Maßzeichnung eines Gussstücks vorliegen, für das eine Holzform herzustellen ist. Die aus einer solchen Fertigungszeichnung ablesbaren Maße lassen sich jedoch aufgrund des beim Gießen auftretenden Schwundes nicht als Maße der für die Holzform erforderlichen Werkstücke verwenden. Es besteht ein Bedarf, ein Verfahren bereitzustellen, mit dem die Herstellung solcher Modellformen für Gusswerkstücke in schnellerer und zugleich weniger fehlerträchtiger Weise erreicht werden kann.

Dieses und andere Ziele werden erfindungsgemäß bei einem Steuerungsverfahren der eingangs genannten Art erreicht, bei dem ein Schnitt-Sollmaß ermittelt wird, bei dem das Referenz-Sollmaß mit einem Kompensationsfaktor multipliziert wird, und das Werkstückpositionierelement auf eine Position verfahren wird, welche ein mittels des Werkstückpositionierelementes positioniertes Werkstück solcherart zu der Schnittkante des Kreissägeblatts positioniert, dass bei Durchführung des Schnitts das Werkstück in einer Länge geschnitten wird, die dem Schnitt-Sollmaß entspricht oder über eine Benutzerschnittstelle eine Position ausgegeben wird, auf die das Werkstückpositionierelement manuell verfahrbar ist, dass bei Durchführung des Schnitts an einem Werkstück, das mittels eines solcherart manuell verfahrenen Werkstückpositionierelements positioniert ist, eine Länge geschnitten wird, die dem Schnitt-Sollmaß entspricht.

Mit dem erfindungsgemäßen Verfahren kann ein Benutzer der Kreissäge über die Benutzerschnittstelle in gewohnter Weise ein Referenzsollmaß eingeben. Erfindungsgemäß wird das Werkstückpositionierelement dann jedoch nicht notwendigerweise auf eine Position verfahren, deren Abstand zum Kreissägeblatt genau diesem Referenzsollmaß entspricht. Stattdessen wird erfindungsgemäß das Referenzsollmaß mit einem individuellen Faktor multipliziert. Dieser Faktor kann beispielsweise ein Schwundmaß eines Gusswerkstoffs darstellen. Der erfindungsgemäße Faktor kann jedoch auch für andere Korrekturmaßnahmen zur Genauigkeitssteigerung eingesetzt werden, so beispielsweise zur Kompensation temperatur- oder luftfeuchtigkeitsbedingter Dehnungen des Werkstückes und/oder von Maschinenteilen der Kreissäge.

Es ist zu verstehen, dass der Kompensationsfaktor vor dem Durchführen des Schnittes und vor dem Verfahren des Werkstückpositionierelements auf die endgültige Position bekannt sein muss bzw. festgelegt sein muss. Dies kann durch unmittelbare Eingabe des Kompensationsfaktors über die Benutzerschnittstelle erfolgen oder durch Berechnung eines Kompensationsfaktors aus anderen, über die Benutzerschnittstelle eingegebenen Daten, wie beispielsweise Werkstoffkennwerte oder Werkstoffbezeichnungen. Weiterhin kann der Kompensationsfaktor aus Messdaten ermittelt werden, wie beispielsweise einer gemessenen Temperatur oder Luftfeuchtigkeit.

Als Werkstückpositionierelement kann insbesondere ein verschiebbarer Anschlag dienen, an den das Werkstück zur Positionierung angelegt wird. In diesem Fall entspricht das Schnitt-Sollmaß dem Abstand zwischen dem Anschlag und der zum Anschlag weisenden Schnittkante des Kreissägeblatts.

In einer hierzu alternativen Variante dient als Werkstückpositionierelement eine verfahrbare Spannvorrichtung für ein Werkstück. Das Werkstück ist in diesem Fall in einer referenzierten Lage mittels der Spannvorrichtung zuvor gespannt worden. Bezüglich dieser referenzierten Lage wird das Spannelement dann so verfahren, dass das Schnitt-Sollmaß eingestellt wird.

Gemäß einer ersten bevorzugten Ausführungsform ist der Kompensationsfaktor ein Schwundmaßfaktor eines Gießwerkstoffs, welcher vor dem Verfahren auf die dem Schnitt-Sollmaß entsprechende Position über eine Benutzerschnittstelle eingegeben wird. Mit dieser Fortbildung wird es dem Benutzer ermöglicht, unmittelbar über die Benutzerschnittstelle die Maße eines Gussteils einzugeben, zugleich über diese Benutzerschnittstelle diese Maße einem bestimmten Schwund zuzuweisen, woraufhin gemäß des erfindungsgemäßen Steuerungsverfahrens entsprechend korrigierte Maße anhand der eingegebenen Daten berechnet werden und das Werkstückpositionierelement auf eine anhand dieser Berechnung entsprechend korrigierte Position verfahren wird. Der Benutzer kann dann unmittelbar den Schnitt ausführen, der dann eine um den entsprechenden gießprozessbedingten Schwund korrigierte Werkstückgeometrie für die Modellform erzielt. Unter einem gießprozessbedingten Schwund ist eine Schrumpfung des Gießwerkstoffs im Zuge von dessen Gussverarbeitung zu verstehen, die bewirkt, dass das letztlich hergestellte Gussstück nach seiner Erkaltung andere, geringere Abmessungen an das Modell aufweist, mit dem die Gussform hergestellt wurde. Dieser Schwund ist insbesondere abhängig vom vergossenen Gussmaterial, teilweise jedoch auch abhängig vom Gießverfahren und der Prozessführung.

Dabei kann gemäß einer weiter bevorzugten Ausführungsform vorgesehen sein, dass der Schwundmaßfaktor eingegeben wird, indem
- der Schwundmaßfaktor direkt als prozentualer Faktor eingegeben wird, oder
- ein Gießwerkstoff direkt über die Benutzerschnittstelle eingegeben wird und aus einer vorherbestimmten Zuordnungstabelle, welche einer Vielzahl von Gießwerkstoffen jeweils einem werkstoffspezifischen Schwundmaßfaktor zuordnet, ein dem eingegebenen Werkstoff entsprechender Schwundmaßfaktor ausgelesen und als Schwundmaßfaktor eingesetzt wird.

Mit dieser Fortbildung wird eine für den Benutzer komfortable und zugleich sehr schnelle Möglichkeit bereitgestellt, um mittels einer Kreissäge eine Modellform für einen späteren Gießvorgang mit einem metallischen Werkstoff herzustellen, der einen gießprozessbedingten Schwund aufweist.

Erfindungsgemäß kann der Benutzer entweder einen Schwundmaßfaktor direkt als prozentualen Faktor eingeben, beispielsweise über die Benutzerschnittstelle, über welche auch das Referenzsollmaß eingegeben wird. Dies bietet den Vorteil einer direkten schnellen Eingabe des Schwundmaßfaktors über eine unmittelbare, beispielsweise prozentuale, Zahlenangabe, was insbesondere bei der Herstellung von Modellen für bekannte Gussverfahren mit bekannten Gussmaterialien vorteilhaft sein kann. Alternativ kann auch ein Gießwerkstoff über die Benutzerschnittstelle eingegeben werden. In diesem Fall wird der Schwundmaßfaktor mittels einer innerhalb der Kreissägensteuerung gespeicherten Zuordnungstabelle bestimmt, welche jedem Gießwerkstoff einen Schwundmaßfaktor zuordnet. Es ist zu verstehen, dass hierbei auch neben dem Gießwerkstoff das Gießverfahren oder sonstige auf den Schwund des Gießverfahrens einflussnehmende Parameter eingegeben werden könnten und entsprechend mittels einer Zuordnungstabelle, die mehrdimensional ist, Berücksichtigung finden können. Ein entsprechender Schwundmaßfaktor wird dann ausgelesen oder aus dieser Mehrzahl von Parametern berechnet. Mit dieser alternativen Vorgehensweise wird es dem Benutzer ermöglicht, für eine Vielzahl von Gießwerkstoffen Modelle herzustellen und hierbei in einer komfortablen Weise mit Hilfe eines Auswahlmenüs durch Eingabe der relevanten Gießparameter, wie Gießwerkstoff und -verfahren einen entsprechenden Schwundmaßfaktor zu bestimmen, der aus zuvor abgespeicherten Kennwerten mittels des Steuerungsverfahrens berechnet oder ausgelesen wird.

Gemäß einer weiteren bevorzugten Ausführungsform ist der Kompensationsfaktor ein Temperaturkompensationsfaktor, welcher einen Maßfehler korrigiert, der aus einer sich durch eine Temperaturdifferenz ergebenden Temperaturdehnung des Werkstücks und/oder eines oder mehrerer Bauteile der Kreissäge resultiert.

Diese Verfahrensfortbildung ermöglicht es, Maßfehler, die durch eine Temperaturdehnung auftreten, zu korrigieren. Solche temperaturbedingten Fehler treten insbesondere dann auf, wenn das Werkstück oder Teile der Kreissäge eine andere Temperatur haben als die spätere Verwendungstemperatur des Werkstücks. Häufig liegt diese Verwendungstemperatur des Werkstücks bei Raumtemperatur. Die Temperatur des Werkstücks beim Zuschnitt kann jedoch unterhalb oder oberhalb dieser Temperatur liegen, insbesondere dann, wenn das Halbzeug, aus dem das Werkstück geschnitten wird, zuvor in einem Werkstücklager lag, das beispielsweise kühler temperiert ist. Des Weiteren können Maschinenteile, wie beispielsweise das Lineal, entlang dessen ein das Werkstückpositionierelement darstellender Anschlag verstellt wird, auf einer höheren Temperatur sein als der Temperatur, bei der die Längeneichung erfolgte, beispielsweise aufgrund von Wärmeleitung von sich erwärmenden Aktuatoren wie Elektromotoren oder dergleichen innerhalb der Maschine. Es ist zu verstehen, dass der Temperaturkompensationsfaktor diese Einflüsse auch in kombinierter Weise berücksichtigen kann, beispielsweise indem eine durch erhöhte temperaturbedingte Dehnung von Maschinenteilen und eine durch reduzierte Temperatur bedingte Dehnung des Werkstücks zu einem Temperaturkompensationsfaktor zusammengesetzt wird, der in entsprechender Weise die jeweiligen Dehnungsanteile berücksichtigt.

So können beispielsweise aufgrund der Temperatur des Werkstücks, der Kreissäge bzw. der Umgebungstemperatur auftretende Wärmedehnungen mit dem Kompensationsfaktor korrigiert werden. Zu diesem Zweck kann unmittelbar eine Temperatur eingegeben und gemessen werden und eine in Abhängigkeit der thermischen Längenausdehnungskoeffizienten des Werkstücks oder von Bauteilen der Kreissäge berechnete Temperaturdehnung berechnet und entsprechend als Faktor zur Korrektur des Referenzsollmaßes auf das Schnittsollmaß berücksichtigt werden.

Insbesondere ist es dabei bevorzugt, wenn der Temperaturkompensationsfaktor ermittelt wird, indem
- die Temperaturdifferenz ermittelt wird,
- eine auf das Referenz-Sollmaß Einfluss nehmende Wärmedehnung zumindest eines Elements der Maßkette anhand des Wärmeausdehnungskoeffizienten des entsprechenden Elements bestimmt wird, wobei die Elemente der Maßkette ein oder mehrere zu schneidende Werkstücke und Bauteile der Kreissäge umfassen, die zwischen Werkstückpositionierelement und Sägeblatt angeordnet sind, und insbesondere das Werkstück und/oder eine Schiene, entlang welcher das Werkstückpositionierelement verfahren wird, umfassen,
- der Temperaturkompensationsfaktor berechnet wird, indem ein Quotient aus dem Referenz-Sollmaß des Werkstücks bei dessen späterer Verwendung und dem Referenz-Sollmaß zuzüglich der sich aus der Temperaturdifferenz resultierenden Wärmedehnung des zumindest einen Elements der Maßkette ergebenden Maß gebildet wird.

Gemäß dieser Fortbildungsform wird der Temperaturkompensationsfaktor für eines oder mehrere Elemente der Maßkette berechnet. Hierbei kann jedes Element der Maßkette einer separaten Berechnung unterworfen werden und die solcherart berechneten Einzelauswirkungen dann zu einem Temperaturkompensationsfaktor zusammengeführt werden. Als Maßkette sind im Sinne dieser Fortbildung alle Bauteile der Kreissäge zu verstehen, die konstruktiv solcherart angeordnet sind, dass eine temperaturbedingte Dehnung des Bauteils Einfluss auf das eingestellte Schnittmaß nimmt. Insbesondere ist als solches Bauteil die Längenanschlagsschiene zu verstehen, entlang welcher ein Anschlag verschoben und an der dieser fixiert wird, da diese insbesondere Einfluss auf temperaturbedingte Maßfehler hat. Des Weiteren ist als Maßkette auch das Werkstück oder, falls mehrere Werkstücke zwischen Werkstückpositionierelement und Kreissägeblatt liegen, diese mehreren Werkstücke zu verstehen.

Gemäß einer weiteren bevorzugten Ausführungsform ist der Kompensationsfaktor ein Feuchtigkeitskompensationsfaktor, welcher einen Maßfehler korrigiert, der aus einer durch eine Feuchtigkeitsdifferenz ergebenden Feuchtigkeitsdehnung des Werkstücks resultiert.

Diese Fortbildungsform ist insbesondere für das Schneiden von Kunststoffmaterialien und Holzwerkstoffen relevant, die eine luftfeuchtigkeitsabhängige Dehnung aufweisen. Auch hierbei kann, wie zuvor bezüglich der Temperatur, die Feuchtigkeit des Werkstücks unmittelbar gemessen werden oder anhand einer Luftfeuchtigkeit in Umgebung der Kreissäge oder in einem Materiallager bestimmt werden.

Dabei ist es insbesondere bevorzugt, wenn der Feuchtigkeitskompensationsfaktor ermittelt wird, indem
- eine Luftfeuchtigkeit gemessen wird,
- ein Feuchtigkeits-Dehnungskoeffizient eines zu schneidenden Werkstücks ermittelt wird,
- die Feuchtigkeitsdifferenz als Differenz zwischen der gemessenen Luftfeuchtigkeit und einer Referenzluftfeuchtigkeit berechnet wird,
- eine resultierende Feuchtigkeitsdehnung des zu schneidenden Werkstücks anhand der Feuchtigkeitsdifferenz, des Referenz-Sollmaßes und des Feuchtigkeits-Dehnungskoeffizienten ermittelt wird, und/
- der Feuchtigkeitskompensationsfaktor berechnet wird, indem ein Quotient aus dem Referenz-Sollmaß des Werkstücks bei dessen späterer Verwendung und dem Referenz-Sollmaß zuzüglich der resultierenden Feuchtigkeitsdehnung gebildet wird.

Mit dieser Fortbildung wird eine hohe Maßgenauigkeit auch bei Werkstoffen erreicht, die feuchtigkeitsabhängige Dehnungen aufweisen. Hierbei wird einerseits ermöglicht, die Feuchtigkeit des Werkstücks im Moment der Bearbeitung zu berücksichtigen und diese auf eine Referenzluftfeuchtigkeit abzugleichen. Diese Referenzluftfeuchtigkeit kann eine Luftfeuchtigkeit sein, welche normalerweise vorherrscht und somit keiner Korrektur bedarf, d.h. einen Kompensationsfaktor von 1 aufweisen sollte. Die Referenzluftfeuchtigkeit kann in gleicher Weise aber auch eine individuelle Luftfeuchtigkeit in der späteren Verwendung des Werkstücks sein. So kann beispielsweise für Werkstücke, die in ihrer späteren Verwendung ein bestimmtes Maß aufweisen, das Referenzschnittmaß um einen bestimmten Betrag reduziert werden, wenn bei dieser späteren Verwendung eine erhebliche Dehnung aufgrund von hoher Umgebungsluftfeuchtigkeit zu erwarten ist.

Die zuvor erläuterten Verfahren zur Kompensation von Temperatur- und Feuchtigkeitseinflüssen können weiterhin fortgebildet werden, indem die Temperaturdifferenz bzw. Feuchtigkeitsdifferenz ermittelt wird, indem
- ein an dem zu sägenden Werkstück und/oder an der Kreissäge bestehender Ist-Wert der Temperatur bzw. Luftfeuchtigkeit gemessen wird und an eine zur Berechnung des Kompensationsfaktors dienende Steuerungseinheit übermittelt wird und/oder
- ein Verwendungswert der Temperatur bzw. Luftfeuchtigkeit der späteren Verwendung des Werkstücks über eine Benutzerschnittstelle eingegeben wird und an eine zur Berechnung des Kompensationsfaktors dienende Steuerungseinheit übermittelt wird, wobei die Temperaturdifferenz bzw. Feuchtigkeitsdifferenz als Differenz zwischen
   o dem Ist- und dem Verwendungswert,
   o dem Ist- und einem Referenzwert, bzw.
   o einem Referenz- und dem Verwendungswert,
gebildet wird.

Diese Fortbildung ermöglicht einerseits eine direkte Erfassung von Temperatur oder Luftfeuchtigkeit mittels eines Sensors, der beispielsweise unmittelbar die Feuchtigkeit oder Temperatur des Werkstücks ermittelt oder auf diese Feuchtigkeit oder Temperatur schließt, indem die Umgebungstemperatur und Luftfeuchtigkeit im Bereich der Kreissäge oder im Bereich eines Materiallagers gemessen wird. Anstelle einer solchen Messung kann auch standardisiert ein Referenzwert für die Werkstücktemperatur oder -feuchtigkeit angesetzt werden, der einem üblicherweise vorherrschenden Standardwert entspricht.

Alternativ oder zusätzlich hierzu kann über eine Benutzerschnittstelle ein Verwendungswert der Temperatur bzw. Luftfeuchtigkeit eingegeben werden. Dieser Verwendungswert entspricht der erwarteten Temperatur bzw. Luftfeuchtigkeit des Werkstücks in seinem späteren Einsatzzweck. Wiederum kann anstelle einer solchen Eingabe auf Referenzwerte zurückgegriffen werden, beispielsweise eine typische Raumtemperatur und Raumluftfeuchtigkeit.

Der Kompensationsfaktor wird anhand der solcherart bestimmten Istwerte bei dem Zuschnitt des Werkstücks und den erwarteten Istwerten bei der späteren Verwendung des Werkstücks dann berechnet, indem entweder sowohl Ist- als auch Verwendungswert berücksichtigt werden oder aber anstelle eines der beiden Werte ein entsprechender Referenzwert berücksichtigt wird. Dabei ist zu verstehen, dass bei Kompensation temperaturbedingter Dehnungen von Bauteilen der Kreissäge stets ein Referenzwert in Form der Eichungstemperatur anzusetzen ist.

Gemäß einer weiteren bevorzugten Ausführungsform ist vorgesehen, dass ein Schwundmaßfaktor nach einem der Ansprüche 2-3 eingegeben wird, und/oder ein Temperaturkompensations- und/oder Feuchtigkeitskompensationsfaktor nach einem der Ansprüche 4-8 ermittelt wird, und der Kompensationsfaktor aus dem Schwundmaßfaktor, dem Temperaturkompensationsfaktor und/oder dem Feuchtigkeitskompensationsfaktor berechnet wird. Mit dieser Ausführungsform wird der Kompensationsfaktor aus zwei oder drei der zuvor erläuterten Kompensationsfaktoren hinsichtlich Gießschwund, Temperatur und Luftfeuchtigkeit berechnet, um hieraus möglicherweise auftretende Maßfehler zu kompensieren.

Des Weiteren ist es bevorzugt, wenn zur Bestimmung der Temperaturdifferenz bzw. Feuchtigkeitsdifferenz eine Temperatur bzw. Feuchtigkeit im Bereich der Kreissäge, insbesondere an oder in der Kreissäge oder im Bereich des Werkstücklagers gemessen wird und an eine zur Berechnung des Kompensationsfaktors dienende Steuerungseinheit übermittelt wird, vorzugsweise drahtlos übermittelt wird. Diese Fortbildung ermöglicht es, durch drahtlose oder drahtgebundene Signalübertragung eine Temperatur oder Luftfeuchtigkeit aus einem Bereich zu messen und an eine Steuerungseinheit zu übermitteln, welcher für die Temperatur bzw. Feuchtigkeit des Werkstücks ausschlaggebend ist.

Gemäß einer noch weiteren bevorzugten Ausführungsform ist vorgesehen, dass über die Benutzerschnittstelle eine Werkstoffbezeichnung eingegeben wird, aus einer zuvor gespeicherten Zuordnungstabelle diesem Werkstoff ein Werkstoffkennwert, insbesondere ein Gießschrumpfungskoeffizient, ein Temperaturdehnungskoeffizient und/oder ein Feuchtigkeitsdehnungskoeffizient, zugeordnet wird und aus diesem einen oder mehreren Werkstoffkennwert(en) der Kompensationsfaktor berechnet wird. Mit dieser Ausführungsform wird eine gegenüber Bedienungsfehlern besonders sichere und zugleich komfortable Steuerung ermöglicht, indem lediglich vom Benutzer erwartet wird, dass er eine Werkstoffbezeichnung, die beispielsweise aus einer vorgegebenen Liste über die Benutzerschnittstelle angeboten und ausgewählt werden könnte, eingegeben wird und dann aus zuvor gespeicherten Daten für diesen spezifischen Werkstoff die für den Kompensationsfaktor erforderlichen Werkstoffkennwerte ausgelesen und zur Berechnung verwendet werden. Dabei kann es sich bei dem eingegebenen Werkstoff einerseits um den Werkstoff des zu bearbeitenden Werkstücks handeln, andererseits aber auch um einen Gusswerkstoff, um einen entsprechenden Schundmaßfaktor zu berechnen. Insbesondere kann auch sowohl ein Gusswerkstoff als auch der zu bearbeitende Werkstoff eingegeben werden, um Schwundmaßfaktor und temperatur- oder feuchtigkeitsbedingte Dehnungen zu berücksichtigen.

Ein weiterer Aspekt der Erfindung ist eine Steuerungseinheit für eine Formatkreissäge, umfassend eine Benutzerschnittstelle zur Eingabe eines Referenzsollmaßes, einen mittels eines Aktuators auf eine aus dem Referenz-Sollmaß berechnete Position verfahrbares Werkstückpositionierelement, insbesondere einen Anschlag oder ein Werkstücktransportelement, welche eine Berechnungseinheit aufweist, die ausgebildet ist, um ein Schnitt-Sollmaß zu ermitteln, indem das Referenz-Sollmaß mit einem Kompensationsfaktor multipliziert wird.

Gemäß dieses Aspekts der Erfindung wird eine Steuerungseinheit bereitgestellt, die sowohl als Erstausrüstung als auch als Nachrüstung für Formatkreissägen, insbesondere auch Plattensägen eingesetzt werden kann, um eine verbesserte Schnittmaßpräzision zu ermöglichen. Die Berechnungseinheit ist insbesondere ausgebildet, um eine Steuerung der Formatkreissäge bzw. Plattensäge gemäß des zuvor erläuterten Steuerungsverfahrens und der dazu erläuterten Fortbildungsformen zu ermöglichen.

Dabei ist zu verstehen, dass die Multiplikation des Referenzsollmaßes mit dem Kompensationsfaktor in gleicher Weise als Division des Referenzsollmaßes mit einem entsprechenden als Kehrwert des Kompensationsfaktors gebildeten Dividenden ausgeführt werden kann. In sinngemäß gleicher Weise kann das Schnittsollmaß berechnet werden, indem zuvor berechnete Dehnungs- oder Schrumpfungswerte zum Referenzsollmaß hinzuaddiert oder davon subtrahiert werden.

Insbesondere kann die Steuerungseinheit eine PC-Schnittstelle aufweisen, um die Berechnung und ggf. die Benutzerschnittstelle auf einem externen PC bereitstellen. In gleicher Weise kann eine solche PC-Schnittstelle an einer Formatkreissäge bereitgestellt sein, um diese Funktion außerhalb der Säge auszuführen,

Es ist besonders bevorzugt, wenn die Steuerungseinheit nach einem der Ansprüche 13-16 fortgebildet wird. Mit dieser solcherart fortgebildeten Steuerungseinheit kann insbesondere ein entsprechend fortgebildetes Steuerungsverfahren nach einer der zuvor erläuterten Ausgestaltungen ausgeführt werden. Bezüglich konstruktiver Details und Vorteilen hierzu wird auf die vorangegangene Beschreibung des entsprechenden Steuerungsverfahrens Bezug genommen.

Ein weiterer Aspekt der Erfindung ist eine Formatkreissäge, welche mit einer Steuerungseinheit der zuvor erläuterten Weise ausgerüstet ist sowie ein Computerprogrammprodukt, welches zur Ausführung der zuvor erläuterten Schritte des erfindungsgemäßen Steuerungsverfahrens ausgebildet ist, wenn es auf einem Computer abläuft. Unter einem Computer in diesem Sinne ist auch eine digital arbeitende Steuerungseinheit zu verstehen, welche in eine Formatkreissäge, eine Plattensäge oder eine Steuerungseinheit für eine solche Säge implementiert ist. Das Computerprogrammprodukt kann insbesondere in Form eines Softwareupdates für eine Steuerung einer solchen Kreissäge ausgebildet sein.

Eine bevorzugte Ausführungsform der Erfindung wird anhand der beiliegenden Figuren beschrieben. Es zeigen:
- Fig. 1:: eine schematische, perspektivische Ansicht einer Formatkreissäge mit aufgelegtem Werkstück,
- Fig. 2:: einen schematischen Funktionsablauf der Datenerfassung, -eingabe und -verarbeitung gemäß des erfindungsgemäßen Verfahrens, und
- Fig. 3:: ein schematisches Ablaufdiagramm der Berechnung des Kompensationsfaktors gemäß des erfindungsgemäßen Verfahrens.

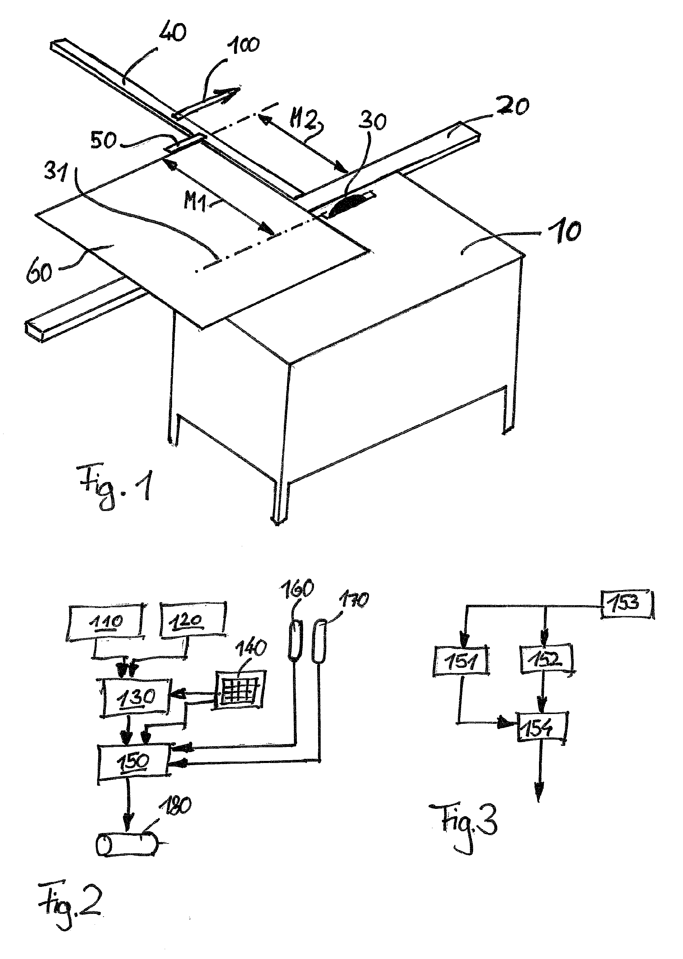

Bezug nehmend zunächst auf Figur 1 weist eine Formatkreissäge, welche mit einer erfindungsgemäßen Steuerungseinheit ausgerüstet sein und das erfindungsgemäße Steuerungsverfahren durchführen kann, eine Auflagefläche auf einem Grundgestell 10 auf, an dem ein Rollwagen 20 an einer Längsseite längsverschieblich gelagert ist.

Am Grundgestell 10 ist ein Kreissägeblatt 30 drehbar und ortsfest gelagert und ragt um einen verstellbaren Betrag über die obere Auflagefläche des Grundgestells 10 hinaus. Das Kreissägeblatt 30 definiert auf seiner zum Rollwagen 20 weisenden Seite eine Schnittkante 31.

Am Rollwagen 20 ist eine Längenanschlagschiene 40 befestigt, die gemeinsam mit dem Rollwagen 20 verschieblich gegenüber dem Maschinengrundgestell 10 bewegt werden kann. Ein Pfeil 100 definiert die Bewegung von Rollwagen 20 und Längenanschlagschiene 40, die zur Durchführung des Schnittes ausgeführt werden muss.

An der Anschlagschiene 40 ist der Anschlag 50 befestigt. Der Anschlag 50 kann in Längsrichtung der Längenanschlagschiene 40 verschoben werden und in einer beliebigen Position fixiert werden. Die Verschiebung des Anschlags 50 kann einerseits manuell oder alternativ automatisch mittels eines Aktuators erreicht werden.

Ein Werkstück 60 ist auf die Auflagefläche, welche durch den Rollwagen 20, das Maschinengrundgestell 10 mit seiner oberen Auflagefläche sowie eine weitere, in Schnittrichtung vor der Längenanschlagschiene liegende Auflagefläche (nicht abgebildet) aufgelegt. Das Werkstück 60 ist an den Anschlag 50 angelegt, wodurch ein Schnittsollmaß M1 definiert wird. Der Anschlag 50 ist zu diesem Zweck von dem Befestigungspunkt der Längsanschlagschiene 40 um einen Abstand M2 verschoben.

Das Maß M1 ist die Zielgröße des erfindungsgemäßen Steuerungsverfahrens und wird ermittelt, indem ein gewünschtes Maß des zuzuschneidenden Werkstücks bzw. eines mit diesem als Form herzustellenden Gusswerkstücks mit einem sich hieraus ergebenden Dehnungsanteil des Werkstücks bzw. Schrumpfungsanteils des Gusswerkstücks sowie einem Dehnungsanteil der Längenanschlagschiene 40 über das Maß M2 einer Berechnung zugeführt wird.

Figur 2 beschreibt ein beispielhaftes Verfahren zur Eingabe, Weiterverarbeitung und Ausgabe der Eingangs- bzw. Zielgröße des erfindungsgemäßen Steuerungsverfahrens.

Zunächst wird ein Referenzsollmaß 110 sowie ein Kompensationsfaktor 120 in eine Benutzerschnittstelle 130 eingegeben. Das Referenzsollmaß 110 kann hierbei ein Sollmaß eines Gussbauteils darstellen, das mit Hilfe einer Form hergestellt wird, die aus dem zuzuschneidenden Werkstück erstellt wird. Das Referenzsollmaß kann aber auch in gleicher Weise das gewünschte Sollmaß des Werkstücks selbst in seiner späteren Verwendung sein.

Der Kompensationsfaktor kann einerseits direkt als prozentualer Wert oder als Faktor eingegeben werden. Alternativ hierzu kann auch aus einer Zuordnungstabelle 140 ein Angebot von Werkstoffen über die Benutzerschnittstelle angezeigt werden und eine Auswahl aus diesen vorgespeicherten Werkstoffen getroffen werden.

Aus der Benutzerschnittstelle 130 werden die solcherart eingegebenen Eingangsparameter an eine Berechnungseinheit 150 weitergegeben. Die Berechnungseinheit 150 fragt gegebenenfalls aus der Zuordnungstabelle 140 spezifische Werkstoffkennwerte ab, falls über die Benutzerschnittstelle ein Werkstoff ausgewählt oder manuell eingegeben wurde. Diese Werkstoffkennwerte können insbesondere eine Schrumpfung des Gießwerkstoffs beschreiben oder ein Temperaturausdehnungskoeffizient oder Luftfeuchtigkeitsausdehnungskoeffizient des bearbeiteten Werkstoffs sein.

Die Berechnungseinheit erhält weiterhin Messwerte von einem Temperatursensor 160 und einem Luftfeuchtigkeitssensor 170, die in einem Materiallager platziert sind, aus dem das Halbzeug, aus dem das Werkstück geschnitten wird, kurz vor der Durchführung des Schnitts zur Kreissäge transportiert wird. Die Temperaturmessung kann z. B. im Materiallager oder im Werkraum erfolgen und kann sowohl die Raumtemperatur als auch die Werkstücktemperatur messen. Die Messung der Werkstücktemperatur kann dabei auch berührungslos erfolgen. Die Datenübertragung von den Sensoren 160, 170 erfolgt vorzugsweise drahtlos.

In der Berechnungseinheit 150 wird aus den solcherart erhaltenen Eingangsdaten ein Kompensationsfaktor berechnet und an einen Aktuator 180 weitergereicht. Der Aktuator 180 verfährt daraufhin motorisch den Anschlag 50 auf eine Position, welche das berechnete Maß M1 in Bezug auf die Schnittkante 31 herstellt.

Alternativ könnte die Berechnungseinheit 150 das Maß M1 bzw. einen Einstellwert auf der Längsanschlagschiene 40 für dieses Maß über eine Ausgabeeinheit wie beispielsweise die Benutzerschnittstelle 130 ausgeben, so dass der Benutzer dieses Maß durch manuelles Verschieben des Anschlags 50 entlang der Längenanschlagschiene 40 einstellen kann.

Figur 3 zeigt schematisch die Berechnungsweise des Kompensationsfaktors innerhalb der Berechnungseinheit 150. Zunächst wird in einem ersten Berechnungsschritt 151 aus dem eingegebenen Referenzsollmaß des Werkstücks, dem zu dem Werkstoff des Werkstücks passenden Temperaturausdehnungskoeffizienten und Feuchtigkeitsausdehnungskoeffizienten sowie den entsprechenden gemessenen Temperaturen und Luftfeuchtigkeiten ein werkstückbezogener Faktor der Temperatur- und Luftfeuchtigkeitsdehnung berechnet. Hierbei wird eine Temperaturdifferenz und Luftfeuchtigkeitsdifferenz der gemessenen Werte gegenüber den Referenzwerten, welche angenommene, typische Temperaturen und Luftfeuchtigkeiten in der späteren Verwendung des Werkstücks darstellen, zugrunde gelegt und die sich aus dieser Temperaturdifferenz ergebende Dehnung des Werkstücks über das Referenzsollmaß berechnet.

In einem zweiten Schritt 152 wird eine Längendehnung der Längenanschlagschiene 40 berücksichtigt. Hierzu wird die gemessene Temperatur mit einer Eichungstemperatur verglichen und die Differenz hieraus bestimmt. Die Eichungstemperatur ist diejenige Temperatur, bei welcher die Längenanschlagschiene und das an dieser angeordnete Lineal für die Positionierung des Anschlags 50 geeicht wurde. Aus dem Referenzsollmaß des Werkstücks kann der Verfahrweg M2 des Anschlags 50 abgeschätzt werden und hierdurch eine Dehnung des relevanten Anteils der Längenanschlagschiene in der Maßkette, also zwischen Anschlag 50 und der Schnittkante 31, berechnet werden. Der Wärmeausdehnungskoeffizient des Materials, aus dem die Längenanschlagschiene gefertigt ist, typischerweise Aluminium, ist ein maschinenspezifischer Wert, der in der Steuerungseinheit bzw. Berechnungseinheit abgespeichert ist. Aus diesen Werten wird ein maschineneigener Faktor berechnet, der in den späteren Kompensationsfaktor einfließt.

Schließlich könnte, sofern das herzustellende Werkstück zur Herstellung eines Modells für einen Gussvorgang dienen soll, ein weiterer anwendungsspezifischer Kompensationsfaktor in einem vorangehenden Berechnungsschritt 153 berechnet werden. In diesem Fall wird aus dem eingegebenen Referenzsollmaß, welches das Referenzsollmaß des späteren Gussteils darstellt, anhand eines Schwundmaßfaktors das Referenzsollmaß für das herzustellende Werkstück berechnet und in die Berechnungsschritte 151 bzw. 153 eingegeben.

Die in den Berechnungsschritten 151, 152 berechneten werkstück- und maschineneigenen Kompensationsfaktoren werden in einem gemeinsamen Berechnungsschritt 154 zusammengeführt und hieraus ein gesamter Kompensationsfaktor berechnet. Mit Hilfe dieses gesamten Kompensationsfaktors kann dann aus dem Referenzsollmaß das Referenzschnittmaß berechnet werden.

Dabei nehmen die einzelnen Faktoren wie folgt Einfluss auf das letztendlich einzustellende Maß M1:
- Wird mit dem Werkstück ein Modell für einen Gießvorgang mit einem Gusswerkstoff hergestellt, der ein Schwundmaß vom beispielsweise 12% aufweist, so beträgt der Schwundmaßfaktor 1,12 bzw. 112%. Ein Referenzsollmaß, welches das spätere Gusswerkstück aufweisen soll, wird daher zur Berechnung des Maßes M1 mit dem Faktor 1,12 multipliziert, um die richtige Position des Anschlags zu bestimmen.
- Wenn das zu schneidende Werkstück eine Temperatur von lediglich 10°C aufweist, das Werkstück aber später bei einer Raumtemperatur von 21 °C das eingegebene Referenzsollmaß aufweisen soll, so muss eine Temperaturdifferenz von 11°C berücksichtigt werden. Unter der Annahme, dass das Werkstück sich mit zunehmender Temperatur ausdehnt, muss daher das Referenzschnittmaß kleiner gewählt werden als das Referenzsollmaß. Der hierbei zu berücksichtigende Temperaturkompensationsfaktor berechnet sich aus dem Ausdehnungskoeffizienten des Werkstücks und der Temperaturdifferenz von 11°C.
- In analoger Weise wird eine feuchtigkeitsbedingte Dehnung des Werkstücks berücksichtigt. Liegt das Werkstück mit einem niedrigeren Feuchtigkeitsgehalt beim Zuschnitt vor als aus der zu erwartenden Luftfeuchtigkeit beim späteren Einsatz zu erwarten ist, so kann hierdurch wiederum eine feuchtigkeitsbedingte Schrumpfung des Halbzeugs eintreten. Um daher beim späteren Einsatz das Referenzsollmaß zu erzielen, muss wiederum ein Referenzschnittmaß gewählt werden, welches niedriger liegt als das Referenzsollmaß.
- Die Längendehnung der Längenanschlagschiene findet ihre Berücksichtigung hingegen nicht gegenüber der späteren Verwendungstemperatur im Abgleich zur vorherrschenden Temperatur in der Werkstatt, sondern im Abgleich einer Eichungstemperatur zur vorherrschenden Temperatur der Längenanschlagschiene. Unter der Annahme, dass die Eichung der Längenteilung der Längenanschlagschiene bei 20°C erfolgte, die Temperatur der Längenanschlagschiene beim Durchführen des Schnitts jedoch bei 17°C liegt, so ist eine Temperaturdifferenz von 3°C zu berücksichtigen. Die Längenanschlagschiene liegt in diesem Fall in einem durch Temperaturschrumpfung geringfügig kürzeren Längsmaß vor als bei ihrer herstellerseitigen Eichung. Um also in diesem Fall ein gewünschtes Referenzsollmaß zu erzielen, muss ein höherer Referenzschnittmaßwert als Einstellwert an der Längenanschlagschiene eingestellt werden, um diese Schrumpfung der Längenanschlagschiene zu kompensieren.

Alle diese einzelnen Einflussfaktoren können gegebenenfalls isoliert oder kombiniert als letztendlicher Kompensationsfaktor in das Steuerungsverfahren gemäß der Erfindung einfließen.

## Patentansprüche

1. Steuerungsverfahren für eine Kreissäge, mit den Schritten:
- Eingeben eines Referenz-Sollmaßes über eine Schnittstelle, insbesondere eine Benutzerschnittstelle oder eine PC-Schnittstelle,
- Verfahren eines Werkstückpositionierelements, insbesondere eines Anschlags oder eine Werkstücktransportelements, auf eine aus dem Referenz-Sollmaß berechnete Position,
**dadurch gekennzeichnet, dass**
- ein Schnitt-Sollmaß ermittelt wird, bei dem das Referenz-Sollmaß mit einem Kompensationsfaktor multipliziert wird, und
- das Werkstückpositionierelement auf eine Position verfahren wird, welche ein mittels des Werkstückpositionierelementes positioniertes Werkstück solcherart zu der Schnittkante des Kreissägeblatts positioniert, dass bei Durchführung des Schnitts das Werkstück in einer Länge geschnitten wird, die dem Schnitt-Sollmaß entspricht oder über eine Benutzerschnittstelle eine Position ausgegeben wird, auf die das Werkstückpositionierelementmanuell verfahrbar ist, dass bei Durchführung des Schnitts an einem Werkstück, das mittels eines solcherart manuell verfahrenen Werkstückpositionierelements positioniert ist, eine Länge geschnitten wird, die dem Schnitt-Sollmaß entspricht.

2. Steuerungsverfahren nach Anspruch 1,
**dadurch gekennzeichnet, dass** der Kompensationsfaktor ein Schwundmaßfaktor eines Gießwerkstoffs ist, welcher vor dem Verfahren des auf die dem Schnitt-Sollmaß entsprechende Position über eine Benutzerschnittstelle eingegeben wird.

3. Steuerungsverfahren nach Anspruch 2,
**dadurch gekennzeichnet, dass** der Schwundmaßfaktor eingegeben wird, indem
- der Schwundmaßfaktor direkt als prozentualer Faktor eingegeben wird oder
- ein Gießwerkstoff direkt über die Benutzerschnittstelle eingegeben/ausgewählt wird und aus einer vorherbestimmten Zuordnungstabelle, welche einer Vielzahl von Gießwerkstoffen jeweils einen werkstoffspezifischen Schwundmaßfaktor zuordnet, ein dem eingegebenen Werkstoff entsprechender Schwundmaßfaktor ausgelesen und als Schwundmaßfaktor eingesetzt wird.

4. Steuerungsverfahren nach Anspruch 1,
**dadurch gekennzeichnet, dass** der Kompensationsfaktor ein Temperaturkompensationsfaktor ist, welcher einen Maßfehler korrigiert, der aus einer durch eine Temperaturdifferenz ergebenden Temperaturdehnung des Werkstücks und/oder eines oder mehrerer Bauteile der Kreissäge resultiert.

5. Steuerungsverfahren nach Anspruch 4,
**dadurch gekennzeichnet, dass** der Temperaturkompensationsfaktor ermittelt wird, indem
- die Temperaturdifferenz ermittelt wird,
- eine auf das Referenz-Sollmaß Einfluss nehmende Wärmedehnung zumindest eines Elements der Maßkette anhand des Wärmeausdehnungskoeffizienten des entsprechenden Elements bestimmt wird, wobei die Elemente der Maßkette ein oder mehrere zu schneidende Werkstücke und Bauteile der Kreissäge umfassen, die zwischen Werkstückpositionierelement und Sägeblatt angeordnet sind, und insbesondere das Werkstück und/oder eine Schiene, entlang welcher das Werkstückpositionierelement verfahren wird, umfassen,
- der Temperaturkompensationsfaktor berechnet wird, indem ein Quotient aus dem Referenz-Sollmaß des Werkstücks bei dessen späterer Verwendung und dem Referenz-Sollmaß zuzüglich der sich aus der Temperaturdifferenz resultierenden Wärmedehnung des zumindest einen Elements der Maßkette ergebenden Maß gebildet wird.

6. Steuerungsverfahren nach Anspruch 1,
**dadurch gekennzeichnet, dass** der Kompensationsfaktor ein Feuchtigkeitskompensationsfaktor ist, welcher einen Maßfehler korrigiert, der aus einer durch eine Feuchtigkeitsdifferenz ergebenden Feuchtigkeitsdehnung des Werkstücks resultiert.

7. Steuerungsverfahren nach Anspruch 6,
**dadurch gekennzeichnet, dass** der Feuchtigkeitskompensationsfaktor ermittelt wird, indem
- eine Luftfeuchtigkeit gemessen wird,
- ein Feuchtigkeits-Dehnungskoeffizient eines zu schneidenden Werkstücks ermittelt wird,
- die Feuchtigkeitsdifferenz als Differenz zwischen der gemessenen Luftfeuchtigkeit und einer Referenzluftfeuchtigkeit berechnet wird,
- eine resultierende Feuchtigkeitsdehnung des zu schneidenden Werkstücks anhand der Feuchtigkeitsdifferenz, des Referenz-Sollmaßes und des Feuchtigkeits-Dehnungskoeffizienten ermittelt wird, und/
- der Feuchtigkeitskompensationsfaktor berechnet wird, indem ein Quotient aus dem Referenz-Sollmaß des Werkstücks bei dessen späterer Verwendung und dem Referenz-Sollmaß zuzüglich der sich aus der resultierenden Feuchtigkeitsdehnung gebildet wird.

8. Steuerungsverfahren nach Anspruch 4 bis 7,
**dadurch gekennzeichnet, dass** die Temperaturdifferenz und/oder. Feuchtigkeitsdifferenz ermittelt wird, indem
- ein an dem zu sägenden Werkstück und/oder an der Kreissäge bestehender Ist-Wert der Temperatur und/oder. Luftfeuchtigkeit gemessen wird und an eine zur Berechnung des Kompensationsfaktors dienende Steuerungseinheit übermittelt wird und/oder
- ein Verwendungswert der Temperatur und/oder. Luftfeuchtigkeit der späteren Verwendung des Werkstücks über eine Benutzerschnittstelle eingegeben wird und an eine zur Berechnung des Kompensationsfaktors dienende Steuerungseinheit übermittelt wird, wobei die Temperaturdifferenz bzw. Feuchtigkeitsdifferenz als Differenz zwischen
o dem Ist- und dem Verwendungswert,
o dem Ist- und einem Referenzwert, bzw.
o einem Referenz- und dem Verwendungswert,
gebildet wird.

9. Steuerungsverfahren nach Anspruch 1,
**dadurch gekennzeichnet, dass**
- ein Schwundmaßfaktor nach einem der Ansprüche 2 bis 3 eingegeben wird, und/oder
- ein Temperaturkompensations- und/oder Feuchtigkeitskompensationsfaktor nach einem der Ansprüche 4 bis 8 ermittelt wird,
und der Kompensationsfaktor aus dem Schwundmaßfaktor, dem Temperaturkompensationsfaktor und/oder dem Feuchtigkeitskompensationsfaktor berechnet wird.

10. Steuerungsverfahren nach dem vorhergehenden Ansprüche 4 bis 8,
**dadurch gekennzeichnet, dass** zur Bestimmung der Temperaturdifferenz und/oder Feuchtigkeitsdifferenz eine Temperatur bzw. Feuchtigkeit im Bereich der Kreissäge, insbesondere an oder in der Kreissäge oder im Bereich des Werkstücklagers gemessen wird und an eine zur Berechnung des Kompensationsfaktors dienende Steuerungseinheit übermittelt wird, vorzugsweise drahtlos übermittelt wird.

11. Steuerungsverfahren nach einem der vorhergehenden Ansprüche,
**dadurch gekennzeichnet, dass** über die Benutzerschnittstelle eine Werkstoffbezeichnung eingegeben wird, aus einer zuvor gespeicherten Zuordnungstabelle diesem Werkstoff ein Werkstoffkennwert, insbesondere ein Gießschrumpfungskoeffizient, ein Temperaturdehnungskoeffizient und/oder ein Feuchtigkeitsdehnungskoeffizient, zugeordnet wird und aus diesem einen oder mehreren Werkstoffkennwert(en) der Kompensationsfaktor berechnet wird.

12. Steuerungseinheit für eine Formatkreissäge, umfassend:
- eine Benutzerschnittstelle zur Eingabe eines Referenzsollmaßes,
- einen mittels eines Aktuators auf eine aus dem Referenz-Sollmaß berechnete Position verfahrbares Werkstückpositionierelement, insbesondere einen Anschlag oder ein Werkstücktransportelement,
**gekennzeichnet durch**
- eine Berechnungseinheit, die ausgebildet ist, um ein Schnitt-Sollmaß zu ermitteln, indem das Referenz-Sollmaß mit einem Kompensationsfaktor multipliziert wird.

13. Steuerungseinheit nach Anspruch 12,
**dadurch gekennzeichnet, dass** die Benutzerschnittstelle zur Eingabe des Kompensationsfaktors ausgebildet ist, insbesondere zur Eingabe eines Werkstoffs ausgebildet ist, wobei in der Steuerungseinheit weiterhin vorzugsweise eine Zuordnungstabelle gespeichert ist, welche einer Vielzahl von Werkstoffen jeweils einen werkstoffspezifischen Schwundmaßfaktor oder Feuchtigkeitsdehnungskoeffizienten und/oder Temperaturdehnungskoeffizienten zuordnet, und die Berechnungseinheit ausgebildet ist, um anhand des eingegebenen Werkstoffs und des aus der Zuordnungstabelle ausgelesenen Werkstoffkennwerts den Kompensationsfaktor zu berechnen.

14. Steuerungseinheit nach einem der vorhergehenden Ansprüche 12 bis 13,
**gekennzeichnet durch** einen Temperatursensor zur Messung der Temperatur eines zu schneidenden Werkstücks und/oder der Umgebungstemperatur, der mit der Berechnungseinheit zur Signalübertragung gekoppelt ist.

15. Steuerungseinheit nach einem der vorhergehenden Ansprüche 12 bis 14,
**gekennzeichnet durch** einen Luftfeuchtigkeitssensor zur Messung der Luftfeuchtigkeit der Umgebung, der mit der Berechnungseinheit zur Signalübertragung gekoppelt ist.

16. Steuerungseinheit nach einem der vorhergehenden Ansprüche 12 bis 15,
**dadurch gekennzeichnet, dass** die Berechnungseinheit zur Durchführung des Steuerungsverfahrens nach einem der Ansprüche 1 bis 10 ausgebildet ist.

17. Formatkreissäge mit einer Steuerungseinheit nach einem der vorhergehenden Ansprüche 12 bis 16.

18. Computerprogrammprodukt zur Ausführung auf einem Computer, welches ausgebildet ist um das Verfahren nach einem der vorhergehenden Ansprüche 1 bis 11 auszuführen, wenn es auf einem Computer abläuft.
